# EUROPEAN PATENT APPLICATION

(11) **EP 2 233 724 A1**
(43) Date of publication of application: **29.09.2010**
(21) Application number: 09100207.1
(22) Date of filing: 27.03.2009
(51) Int. Cl.: F02D 41/00, F02D 19/02

(54) **An electronic control unit to control a set of fuel injectors**

(71) Applicant: Robert Bosch GmbH, 70469 Stuttgart (DE)
(72) Inventor: Molitor, Erich, 79232, March (DE)

(57) **Abstract**

The invention relates to a device and a method to control fuel injection in a vehicle. The ECU (100) receives a set of engine parameters (103) and a pressure signal (104) to control a set of fuel injectors (104 to 107). The ECU (100) computes the amount of fuel required for each cylinder for one combustion. The amount of fuel required is computed based on the engine parameters (103). The ECU (100) also computes the maximum available time for the injection, the number of fuel injectors needed to be opened to inject the required amount of fuel and the durations of their openings. The ECU (100) opens the required number of fuel injectors (104 to 107) accordingly. The fuel injectors (104 to 107) inject the required amount of fuel in the intake manifold (110) of the engine where the fuel gets mixed with the air. The air-fuel mixture is delivered to the cylinders as explained previously. The ECU (100) operates the fuel injectors (104 to 107) in such a way that at least one of the fuel injectors is opened for a much longer duration than at least one other fuel injector. This will bring down the number of openings and closings of a fuel injector and increases the life of the fuel injectors (104 to 107).

## Description

### State of the Art

The invention relates to a method and a device to control a set of fuel injectors which are located in a common intake manifold of a combustion engine. US 6098595 discloses a combustion engine having multiple injectors in a common intake manifold wherein a pair of injectors are operated simultaneously to inject fuel into the common intake manifold.

### Advantages of the invention

The device according to the independent patent claim has the below mentioned advantages:
Based on the engine operating conditions, some of the fuel injectors are kept open for a longer time, the durations of opening of the fuel injectors some times extending beyond one combustion cycle. This will bring down the number of times the fuel injectors are opened and closed in a given time, resulting in a longer life of the fuel injectors.

Also because the number of openings and closings of the fuel injectors are reduced, cheaper fuel injectors can be used without compromising the life time of the fuel injectors, resulting in reduced costs.

Further improvements and/or advantages are realised by the features of the dependent patent claims.

The ECU uses the known techniques to keep some of the fuel injectors longer than the other fuel injectors, without needing any special control signals.

### Brief descriptions of the drawings

- Figure 1: shows a schematic of the invention
- Figure 2 to 4: show examples of the operation of the invention.

### Description of the embodiments

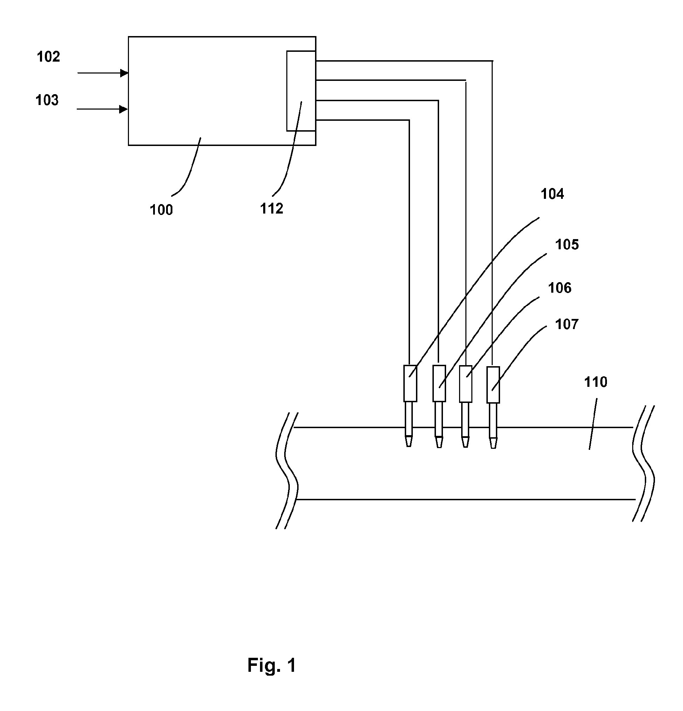

Fig. 1 shows a schematic of the invention. Shown in fig. 1 is an ECU 100 which receives a set of engine parameters 102 and a pressure signal 103 which is indicative of a pressure in the fuel path which is not shown in the figure 1, to control a set of fuel injectors 104 to 107. The ECU 100 controls the opening and closing of the fuel injectors 104 to 107 to inject fuel into a common intake manifold 110 of the engine which is not shown in fig. 1, based on the engine parameters 102 and the pressure signal 103. The ECU 100 further comprises a control means 112 which generates control signals to control the opening and closing of the fuel injectors 104 to 107.

Here four fuel injectors are shown as an example, but the number of fuel injectors may vary based on the engine requirements.

A fuel tank which is not shown in fig. 1 stores the gaseous fuel required for the vehicle. The fuel is supplied to the to the fuel injectors 104 to 107 at a pre-defined pressure via a fuel supply path which is not shown in fig. 1. The injectors 104 to 107 are located in a common intake manifold 110. The common intake manifold 110 later branches into different paths called runners which are connected to individual cylinders which are not shown in fig. 1. Some vehicles may have a single fuel tank using only one type of fuel. There may be vehicles with two fuel tanks for two different types of fuels used by the engine. These are called bi-fuel engines.

The ECU 100 is connected to a set of engine and vehicle sensors which are not shown in fig. 1, to monitor engine parameters 102. The engine parameters 102 may include engine speed, crank shaft position or crank angle, engine load, vehicle speed, coolant temperature, intake air temperature, air-fuel ratio etc. The ECU 100 is also connected to various actuators and components which are not shown in fig. 1, to control the engine in response to the engine parameters 102. The typical actuators and components include, for example, fuel injectors, fuel pump, exhaust gas recirculation valve, valve actuators, exhaust system etc.

The present invention proposes a method to operate the fuel injectors placed in the intake manifold 110 in an efficient way to increase the life of the fuel injectors 104 to 107.

The ECU 100 computes the required amounts of fuel to be injected into the common intake manifold for individual cylinders for one combustion, based on the engine parameters. The ECU 100 also computes the maximum time available for injecting fuel for one cylinder, based on the duration of a combustion cycle, the combustion cycle comprising four strokes of a cylinder.

combustion cycle of the engine comprises the combustion cycles of the individual cylinders, beginning with intake stroke of a first cylinder and ending with an exhaust stroke of a last cylinder in a multi cylinder engine.

The combustion cycle duration is computed as below for a 4 cylinder engine.

Suppose the engine speed is 1500 RPM.

Revolutions per second = 1000/60 = 25.

Time for one revolution: 1/25 = 0.04 second or 40 milliseconds.

Two revolutions of engine form one combustion cycle, so one combustion cycle duration is 80 milliseconds.

No of cylinders = 4.

So the maximum time available to inject the required amount of fuel for individual cylinders is 20 milliseconds at the above RPM. This time is referred as available time.
We assume that the intake strokes of different cylinders are placed 180 degrees apart with each other with respect to the crank angle, starting from 0 degrees of the crank angle. So the fuel injections for different cylinders start at every 180 degrees of the crank angle.

Based on the required amount of fuel to be injected for one cylinder and the pressure signal 103, the ECU 100 computes the required time for one fuel injector to inject the required amount of fuel for one cylinder. If the required time is less than the available time for injection, then the ECU 100 opens only one fuel injector for the required time. The other fuel injectors are kept closed. If the required time for one fuel injector to inject fuel is more than the available time, then there is a need to open more than one fuel injectors at the same time. The ECU 100 computes the number of fuel injectors to be opened, based on the required time and the available time.

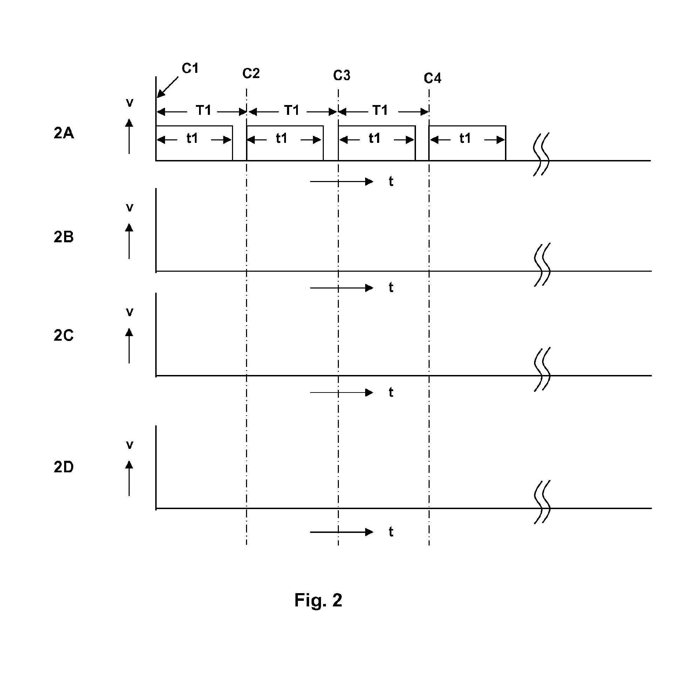

Fig. 2, Fig. 3 and Fig. 4 show different examples of the proposed method of operating the fuel injectors.

Fig. 2 shows an example of the proposed method of operating the fuel injectors for an engine running at low load or idling. The graph 2A represents the control signal for injector 104, the graph 2B represents the control signal for injector 105, the graph 2C represents the control signal for injector 106 and the graph 2B represents the control signal for injector 107. The X axis represents the time and the Y axis represents the amplitude of the control signal, for example, a voltage level. A high level of the control signal represents that the fuel injector is in open state and injecting the fuel. A low level of the control signal represents that the fuel injector is in closed state.

In this example, the available time T1 for injection is more than the required time t1 for injection, so the ECU opens only one fuel injector as shown in 2A. The fuel injector is opened at a reference point of time C1 to inject fuel into first cylinder for a duration of t1. After 180 degrees of crank angle from the reference point C1, the injection for second cylinder starts. This is shown at time C2. The injection is repeated every 180 degrees of crank angle for the remaining cylinders, as shown at time C3 and C4. Whenever the engine parameters change, the available time T1 for the fuel injection changes and also the injection durations.

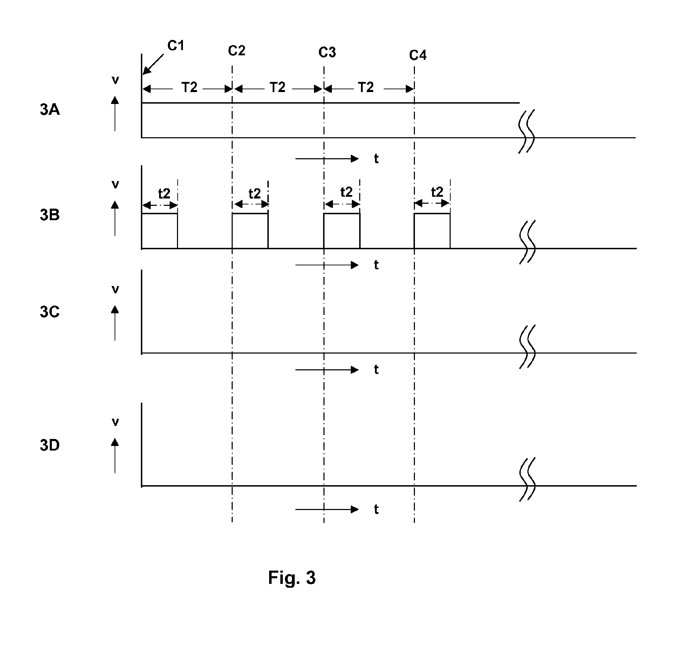

Shown in Fig. 3 is another example where the engine load is more compared to Fig. 2. Here the required time for injection is more than the available time T2, so more than one fuel injectors need to be opened. The graph 3A shows one fuel injector open for a maximum available time T2 and the graph 3B shows other fuel injector open for a part of the available time. At C1, fuel is injected for cylinder 1, at C2 for cylinder 2 which is separated by 180 degrees of crank angle from C1 and so on for other cylinders at C3 and C4. Because each cylinder needs one injector to be open for time T1 and the other injector open for t2, one injector is kept continuously open as shown in 3A. The other injector is opened and closed for a part of the available time as shown in 3B. The remaining fuel injectors are kept closed all the time. Whenever the engine parameters change, the available time T2 for the fuel injection changes and also the injection durations.

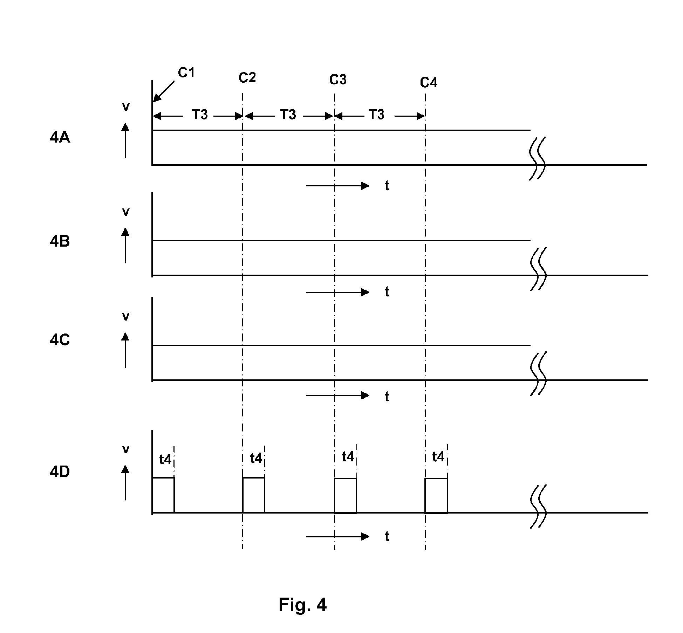

Shown in Fig. 4 is another example where the engine is running at full load. Here as an example, four fuel injectors are shown being operated, based on the engine parameters. Based on the available time for fuel injection and the required time for the fuel injectors to be open, three of the fuel injectors are kept open continuously as shown in 4A, 4B and 4C and the fourth fuel injector is open only for a time t3 as shown in 4D. By operating this way the three fuel injectors may remain continuously open for a plurality of combustion cycles unless the engine load decreases.

It is observed in the Fig. 3 and 4 that when more than one fuel injectors are operated by the ECU 100, at least one of the fuel injectors is kept open for a much longer duration compared to the other fuel injectors. This is because, to supply the amount of fuel at higher loads more than one fuel injectors are needed. So one of the fuel injectors is kept open for a duration of 180 degrees of crank angle in a four cylinder engine. So if the same injector has to inject fuel for all the four cylinders, it needs to be open for 720 degrees of the crank angle or it needs to be open for the entire combustion cycle. Once the present combustion cycle is over, the next combustion cycle begins immediately and the same injector is kept open. This way same injector is kept open for a plurality of combustion cycles and the other injectors are opened for a partial duration of the combustion cycle.

Whenever there is a change in the engine load, the ECU 100 again computes the amount of fuel to be injected, the number of fuel injectors to be operated and their opening durations.

By operating the fuel injectors using the method explained above, it is observed that based on the engine parameters some of the fuel injectors are continuously kept open for multiple combustion cycles and some of the fuel injectors are kept open for a partial duration of the combustion cycle. This reduces the number of openings and closings of the fuel injectors over a given duration of time, increasing the life of the fuel injectors.

Because the number of openings and closings of the fuel injectors over a given duration is reduced, cheaper fuel injectors can be used without sacrificing the performance or safety of the engine, thereby reducing the cost of the engine.

Operating the fuel injectors as explained above has also the below mentioned advantages.

Because of aging, if any of the fuel injectors are not able to inject the pre-determined amount of fuel in a pre-determined duration at a predetermined fuel pressure, then other fuel injectors can be used to compensate for the fuel injector with aging problem. Other injectors can be kept open for a longer time than the required time to compensate for the fuel injector with aging problem.

Similarly, if any of the fuel injectors are completely faulty and not delivering the fuel, such fuel injectors can be kept closed. In most cases the other fuel injectors should be able to share the load of the faulty fuel injectors without drastically affecting the performance of the engine, till the time the vehicle is taken to a work shop to repair or replace the faulty fuel injectors.

## Claims

1. A method to operate a gaseous fuel injection arrangement comprising an ECU (100), at least two fuel injectors (104 to 107) in a common intake manifold (110) of a combustion engine, the said method comprising the steps:
- computing the amount of fuel to be injected into the common intake manifold (110)
- determining the required number of fuel injectors (104 to 107) to be opened in dependence of the amount of fuel to be injected
- operating the required number of fuel injectors (104 to 107) in such a way that at least one of the said fuel injectors is kept open for a much longer duration than at least one said other fuel injector

2. A method according to claim 1 wherein the said fuel injector is kept open for a much longer duration, the said much longer duration is at least more than one combustion cycle.

3. A method according to claim 1 and 2 wherein the said combustion cycle comprises the duration of execution of four strokes by a cylinder.

4. A method according to claim 1 and 2 wherein when N number of fuel injectors need to be operated to inject the said amount of fuel, N-1 of the said fuel injectors are kept continuously open for a plurality of combustion cycles and one fuel injector is opened for a partial duration in the combustion cycle.

5. A method according to claim 1 wherein when a fuel injector is not injecting a pre-determined amount of fuel in a pre-determined time at a pre-determined fuel pressure, at least one said other fuel injector is opened for a longer duration to compensate the faulty fuel injector.

6. A controller (100) to control at least two fuel injectors (104 to 107) to inject fuel into a common intake manifold (110) of a combustion engine, the said controller (100) adapted to read at least one engine parameter (103) and a fuel pressure signal (104) to compute a required amount of fuel to be injected, the said controller **characterized by**:
- a control means (112) adapted to open at least one of the said fuel injectors for a much longer duration than at least one other said fuel injector.
